# NEUE EUROPÄISCHE PATENTSCHRIFT

(11) **EP 3 545 748 B2**
(45) Veröffentlichungstag und Bekanntmachung des Hinweises auf die Entscheidung über den Einspruch: **01.11.2023**
(45) Hinweis auf die Patenterteilung: 18.11.2020
(21) Anmeldenummer: 19151117.9
(22) Anmeldetag: 10.01.2019
(51) Int. Cl.: A01D 41/127, A01D 41/14

(54) **ERNTEVORSATZGERÄT**
HARVESTING ATTACHMENT
APPAREIL ADAPTABLE DE RÉCOLTE

(30) Priorität: 28.03.2018 DE 102018107406
(43) Veröffentlichungstag der Anmeldung: 02.10.2019
(73) Patentinhaber: CLAAS Selbstfahrende Erntemaschinen GmbH, 33428 Harsewinkel (DE)
(72) Erfinder: Füchtling, Christian, 48317 Drenstein Rinkerode (DE); Tillman, Balázs, 5000 Szolnok (HU); Hinz, Thomas, 33428 Harsewinkel (DE)

(56) Entgegenhaltungen:
- EP-A1- 0 048 127
- EP-B1- 2 695 511
- WO-A1-2009/136269
- US-A- 3 349 747
- US-A- 3 967 437
- US-A- 3 967 437
- US-A- 3 982 383
- US-A- 4 327 544
- US-A- 4 327 544
- US-A- 4 332 126
- US-A1- 2008 276 590
- US-A1- 2008 276 590
- US-A1- 2014 075 912
- US-A1- 2014 075 912

## Beschreibung

Die vorliegende Erfindung betrifft ein Erntevorsatzgerät gemäß dem Oberbegriff des Anspruches 1 sowie einen Mähdrescher mit einem Erntevorsatzgerät nach Anspruch 8.

Ein insbesondere als Schneidwerk ausgebildetes Erntevorsatzgerät wird von einem Mähdrescher mit einem bodenkopierenden Messerbalken über ein zu bearbeitendes Territorium bewegt, wobei der flexible Messerbalken der Kontur des Bodens folgt. Hierzu ist der Messerbalken an einer Vielzahl von um zumindest eine horizontale Achse schwenkbarer Tragarme angeordnet, die an einem Rahmen des Erntevorsatzgerätes angelenkt sind. Dabei liegt der Messerbalken selbst auf dem zu kopierenden Boden auf, während der Rahmen des Erntevorsatzgerätes zu dem Boden von dem selbstfahrenden Mähdrescher beabstandet gehalten wird. Vor Beginn des Erntebetriebes werden von einer Bedienperson eine Sollbewegungshöhe zwischen dem Rahmen und dem Boden sowie eine Sollposition der Tragarme relativ zu dem Rahmen eingestellt. Die Sollposition der Tragarme bestimmt, wie groß eine in vertikaler Richtung begrenzte Auslenkung der Tragarme und des daran angeordneten Messerbalkens um die Sollposition in vertikaler Richtung sein kann. Auf diese Weise kann jeder Tragarm eine Ausgleichbewegung aufgrund bestehender Unebenheiten des zu bearbeitenden Bodens, beispielsweise in Form einer Senke oder einer Erhebung, ausführen. Die aufgrund der Auslenkung auftretende Schwenkbewegung der Tragarme wird durch zumindest eine an dem Erntevorsatzgerät angeordnete Sensoranordnung erfasst und an eine Steuerungsvorrichtung der Erntemaschine übertragen. Hierfür wird im Allgemeinen eine manuelle Einstellung der Sollbewegungshöhe und der Sollposition durch eine Bedienperson durchgeführt. Dies erfolgt durch den Abgleich eines Wertes der Sollposition an der Steuerungsvorrichtung und einer an dem Erntevorsatzgerät befindlichen Anzeige. Die Anzeige ist als eine Skale ausgebildet, die an einer äußeren, ortsfesten Seitenwand des Erntevorsatzgerätes angeordnet ist. Durch eine Relativbewegung des äußersten Tragarmes gegenüber der Seitenwand wird eine aktuelle Arbeitsposition des äußeren Tragarmes an der Skale angezeigt. Oftmals ist aufgrund der unebenen Bodenkontur die von dem äußersten Tragarm an der Skale dargestellte Arbeitsposition während der Einstellung nicht repräsentativ für die übrigen Tragarme. Diese können entsprechend der Bodenkontur eine stärkere Auslenkung in unterschiedlichen Richtungen erfahren. Dadurch kann es während der manuellen Einstellung auf unebenen Untergrund zu deutlichen Unterschieden in der Einstellung von Sollbewegungshöhe und Sollposition kommen, was zu einer fehlerhaften Funktion bzw. zu einer Überbeanspruchung des Erntevorsatzgerätes führt.

Aus der EP 2 695 511 B1 ist ein Höhensteuerungssystem bekannt, welches der Einstellung und Einhaltung einer Sollbewegungshöhe eines Schneidwerks dient. Das Höhensteuerungssystem steuert dabei das Schneidwerks gemäß einem Algorithmus in Abhängigkeit von einem Höhensignal zur Einhaltung einer von einer Bedienperson voreingestellten Sollbewegungshöhe an.

Aus der US 2014/075912 A1 ist ein Erntevorsatz bekannt, der die Merkmale des Oberbegriffs des Anspruchs 1 aufweist.

Ausgehend vom vorstehend genannten Stand der Technik liegt der vorliegenden Erfindung die Aufgabe zugrunde, ein Erntevorsatzgerät der eingangs genannten Art weiterzubilden, um einer Bedienperson einen genaueren Abgleich der Sollbewegungshöhe und der Sollposition zu ermöglichen.

Diese Aufgabe wird erfindungsgemäß durch ein Höhensteuerungssystem gemäß dem Anspruch 1 sowie einen Mähdrescher gemäß dem Anspruch 8 gelöst. Vorteilhafte Weiterbildungen sind Gegenstand der Unteransprüche.

Gemäß dem Anspruch 1 wird ein Erntevorsatzgerät vorgeschlagen, welches einen Rahmen sowie einen bodenkopierenden Messerbalken umfasst, wobei der Messerbalken an einer Vielzahl von um zumindest eine horizontale Achse schwenkbarer Tragarme angeordnet ist, die an dem Rahmen angelenkt sind. Zur Erfassung der Schwenkbewegung wenigstens eines der Tragarme ist zumindest eine Sensoranordnung an dem Erntevorsatzgerät angeordnet. Um einer Bedienperson einen genaueren Abgleich der Sollposition zu ermöglichen, ist erfindungsgemäß vorgesehen, dass die zumindest eine Sensoranordnung wenigstens einen Messwertaufnehmer umfasst, auf welchen die Schwenkbewegung der Tragarme des Erntevorsatzgerätes mechanisch übertragbar ist, und dass an dem Erntevorsatzgerät ein Positionsindikator angeordnet ist, der an die Bewegung des wenigstens einen Messwertaufnehmers gekoppelt ist. Auf diese Weise signalisiert der Positionsindikator einen Wert, der mit dem an eine Steuerungsvorrichtung übertragenen Signal der Sensoranordnung korrespondiert. Auf diese Weise können Fehleinstellungen verhindert werden, die dazu führen, dass eine Auslenkung des Messerbalkens nach oben größer ist, als ein Sicherheitsabstand zwischen der Sollposition und einem oberen Endanschlag zur Vermeidung von Überlastungen von Messerbalken und Tragarmen. Zudem wird das Einstellen des Erntevorsatzgerätes im Stand sogar bei unebenen Untergrund ermöglicht, da die Genauigkeit der Einstellung der Sollbewegungshöhe und der tatsächlichen Position des Erntevorsatzgerätes weitgehend unabhängig von der Beschaffenheit des Bodens ist. Die Bedienperson ist nicht gehalten, einen möglichst ebenen Untergrund für die Einstellung vor der Aufnahme des Erntebetriebs auszuwählen. Insbesondere kann das Erntevorsatzgerät als ein Bandschneidwerk ausgeführt sein.

Erfindungsgemäß ist der Messwertaufnehmer als zumindest eine sich parallel zum Rahmen erstreckende, drehbar gelagerte Welle ausgebildet, die mit den Tragarmen durch jeweils eine Hebelanordnung verbunden ist. Dies ermöglicht es, dass der als Welle ausgebildete Messwertaufnehmer nur von dem am stärksten ausgelenkten Tragarm entsprechend seiner Auslenkrichtung verdreht wird.

Insbesondere kann die Sensoranordnung zumindest einen Sensor zur Erfassung der Drehbewegung der Welle umfassen. Dazu kann der zumindest eine Sensor beispielsweise als berührungslos arbeitender Drehwinkelsensor oder als potentiometrischer Drehwinkelsensor ausgebildet sein.

Bevorzugt kann der Positionsindikator an einer dem Messerbalken abgewandten Seite des Rahmens angeordnet sein. Dies hat den Vorteil, dass die in einer Kabine des Mähdreschers befindliche Bedienperson insbesondere während des Einstellvorgangs zugleich freie Sicht auf den Positionsindikator an dem Erntevorsatzgerät und eine in der Kabine befindliche Anzeigevorrichtung der Steuerungsvorrichtung hat. Während des Erntevorgangs kann die Bedienperson anhand der Anzeige durch den Positionsindikator auf einfache Weise beobachten, ob es zu einer Überlastung aufgrund der eingestellten Sollposition kommen kann.

Hierbei kann der Positionsindikator durch Übertragungsmittel mit der zumindest einen Welle zur Übertragung ihrer Bewegung auf den Positionsindikator verbunden sein. Durch das Übertragungsmittel kann der Positionsindikator an die Bewegung des wenigstens einen Messwertaufnehmers gekoppelt werden.

Gemäß einer bevorzugten Ausführungsform kann das Übertragungsmittel einen Bowdenzug umfassen. Vorteilhaft ist, dass der Bowdenzug aufgrund seiner Flexibilität und des geringen Bauraumbedarfs bei der Anordnung einfach an konstruktive Gegebenheiten des Rahmens anpassbar. Darüber hinaus kann der Bowdenzug sowohl Zug- als auch Druckkräfte übertragen. Somit kann das Verdrehen der zumindest einen Welle in beide Richtungen, sowohl wegen der Auslenkung der Tragarme nach unten durch eine Senke oder die Auslenkung der Tragarme nach oben durch eine Erhebung, auf den Positionsindikator übertragen werden.

Alternativ kann das Übertragungsmittel eine Koppelstange oder eine Geber-Nehmer-Zylinderanordnung umfassen, durch welche die Drehbewegung der Welle auf den Positionsindikator übertragbar ist.

Erfindungsgemäß ist zur Visualisierung der durch die Drehbewegung der Welle erfassten Auslenkung der Positionsindikator mit einer bogenförmigen Skale ausgeführt, entlang der ein um eine Schwenkachse schwenkbares Anzeigeelement verschieblich ist. Die Skale weist einen Wert für eine Neutralstellung auf, sowie weitere Werte, die die richtungsabhängige Drehung der zumindest einen Welle aufgrund der stärksten Auslenkung eines der Tragarme wiedergibt. Die Neutralstellung stellt sich ein, wenn während der Einstellung von Sollbewegungshöhe und Sollposition, die an der Steuerungsvorrichtung vorgegebene Sollposition erreicht wird.

Vorzugsweise kann das Anzeigeelement als ein Hebelarm ausgebildet sein, wobei an einem Ende des Anzeigeelementes das Übertragungsmittel angreift und dessen anderes Ende als ein Zeiger fungiert.

Des Weiteren wird ein Mähdrescher mit einem Erntevorsatzgerät sowie einer Steuerungsvorrichtung zur Ansteuerung des Erntevorsatzgerätes beansprucht, wobei das Erntevorsatzgerät nach einem der Ansprüche 1 bis 7 ausgebildet ist.

Die vorliegende Erfindung wird nachstehend anhand eines in den Zeichnungen dargestellten Ausführungsbeispieles näher erläutert.

Es zeigen:
- Fig. 1: eine schematische Ansicht eines Schneidwerkes;
- Fig. 2: eine Teilansicht eines Seitenabschnittes des Schneidwerkes gemäß Fig. 1;
- Fig. 3: eine teilweise freigeschnittene Ansicht eines Tragarmes des Schneidwerks;
- Fig. 4: eine Teilansicht des Schneidwerks von hinten;
- Fig.: eine Teilansicht des Schneidwerks von hinten mit einem Positionsindikator.

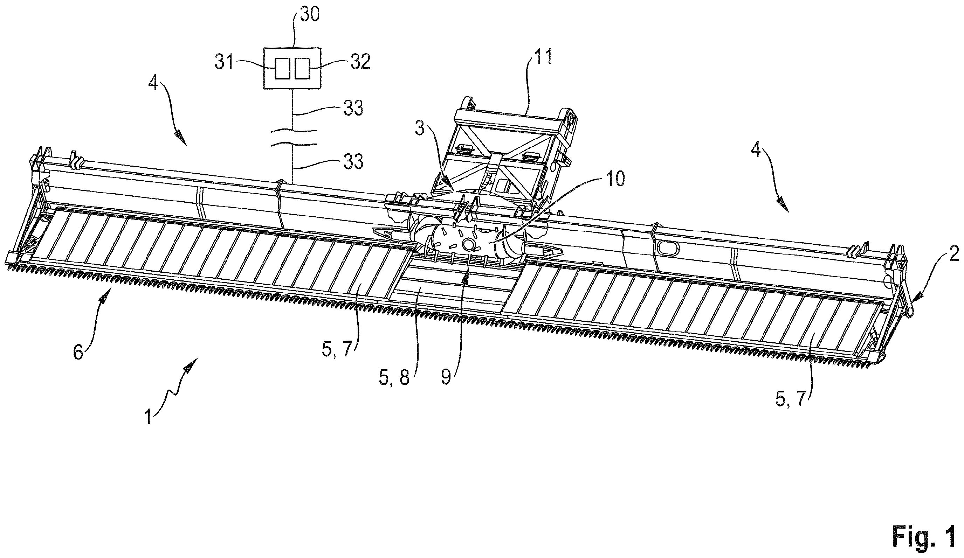

Die Darstellung in Fig. 1 zeigt eine schematische Darstellung eines als Schneidwerk 1 ausgebildeten Erntevorsatzgerätes. Das Schneidwerk 1 in der dargestellten Ausführungsform ist als ein flexibles Bandschneidwerk ausgebildet. Ein solches als Bandschneidwerk ausgeführtes Schneidwerk 1 weist einen Grundrahmen 2 auf, an welchem ein Mittenabschnitt 3 und mindestens zwei benachbart zu dem Mittenabschnitt 3 angeordnete Seitenabschnitte 4 angeordnet sind. An dem Mittenabschnitt 3 und den Seitenabschnitten 4 ist auf der dem Grundrahmen 2 gegenüberliegenden Vorderseite des Schneidwerkes 1 ein bodenkopierender Messerbalken 6 angeordnet, der sich im Wesentlichen über die gesamte Breite des Schneidwerkes 1 erstreckt. An dem Grundrahmen 2 des Schneidwerkes 1 sind (nicht dargestellte) als Haspeln ausgebildete Erntegutannahmevorrichtungen angeordnet, die sich im Wesentlichen über die Breite eines Seitenabschnittes 4 sowie teilweise über die Breite des Mittenabschnittes 3 erstrecken. Die Haspeln dienen der Verbesserung der Aufnahme des Erntegutes durch das Schneidwerk 1.

Das von dem Messerbalken 6 abgetrennte Erntegut wird einer hinter dem Messerbalken 6 angeordneten Fördervorrichtung 5 zugeführt, die auf den jeweiligen Seitenabschnitten 4 als mindestens ein endlos umlaufendes Band 7 ausgeführt ist, welches parallel zur Längsachse des Schneidwerks 1 umläuft. Die endlos umlaufenden Bänder 7 sind benachbart zu dem Mittenabschnitt 3 angeordnet, um von dem Messerbalken 6 abgeschnittenes Erntegut seitwärts in Richtung des Mittenabschnittes 3 zu transportieren und einer Einzugsvorrichtung 9 zuzuführen. Der Mittenabschnitt 3 umfasst ebenfalls eine als endlos umlaufendes Förderband 8 ausgebildete Fördervorrichtung 5. Andere Ausgestaltungen der Fördervorrichtung 5 im Bereich des Mittenabschnitts 3 sind denkbar. Die Einzugsvorrichtung 9 ist als eine antreibbare Einzugswalze 10 ausgeführt. Die Einzugsvorrichtung 9 führt das von den endlos umlaufenden Bändern 7 dem Mittenabschnitt 3 seitlich zugeführte Erntegut einer in dem Grundrahmen 2 vorgesehenen, hinter der Einzugswalze 10 befindlichen Öffnung zu, durch welche das Erntegut durch einen an einem nicht dargestellten Mähdrescher befindlichen Einzugskanal 11, an dem das Schneidwerk 1 lösbar befestigt ist, dem Mähdrescher zur weiteren Verarbeitung zugeführt wird.

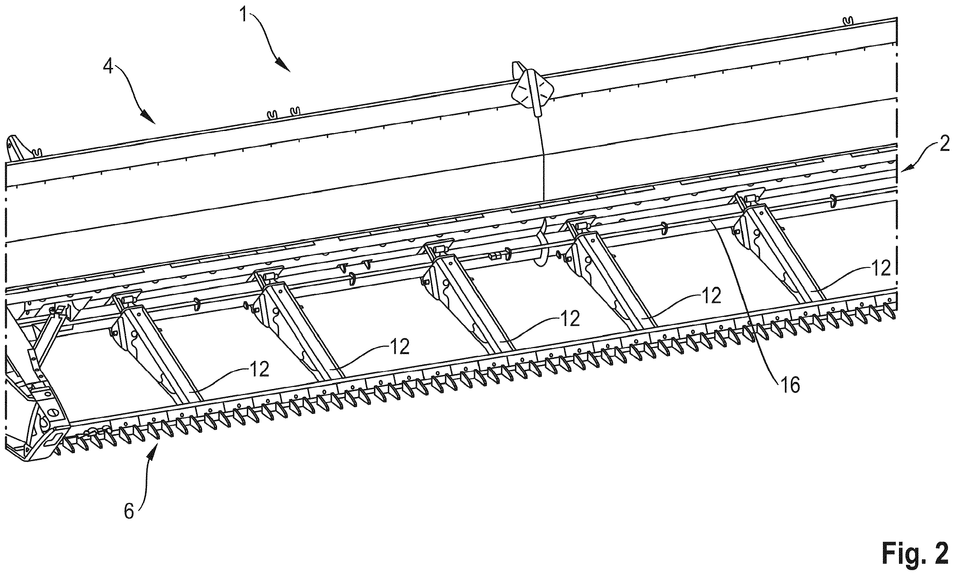

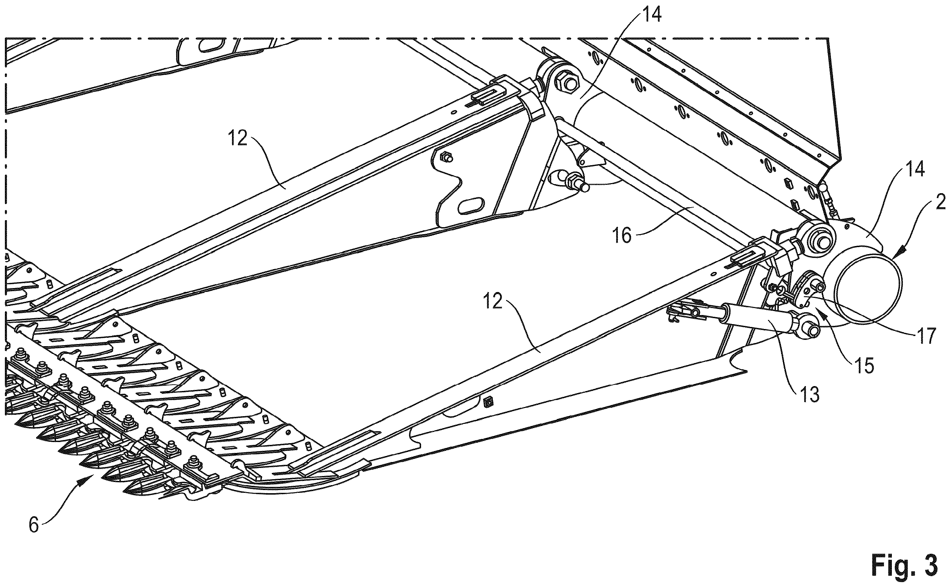

In Fig. 2 ist eine Teilansicht eines Seitenabschnittes 4 des Schneidwerkes 1 ohne das endlos umlaufende Förderband 7 gemäß Fig. 1 dargestellt. Die Seitenabschnitte 4 sind spiegelsymmetrisch ausgeführt, so dass die nachfolgende Beschreibung, soweit sie den dargestellten Seitenabschnitt 4 und daran angeordnete Komponenten betrifft, im Wesentlichen auf den anderen Seitenabschnitt 4 übertagbar ist. Jeder Seitenabschnitt 4 weist eine Vielzahl von Tragarmen 12 auf, die schwenkbar an dem Grundrahmen 2 angelenkt sind. Über die Breite des Seitenabschnittes 4 erstreckt sich eine durchgehende Welle 16, welche ein Teil zumindest einer Sensoranordnung 15 ist, welche in Fig. 3 näher dargestellt ist. Die durchgehende Welle 16 erstreckt sich im Wesentlichen über die Breite des Schneidwerks 1.

Die Darstellung in Fig. 3 zeigt eine teilweise freigeschnittene Ansicht eines Tragarmes 12 des Schneidwerks 1. An dem Grundrahmen 2 sind die Tragarme 12 um eine horizontale Achse schwenkbar angelenkt. An den Tragarmen 12 ist der bodenkopierende Messerbalken 6 angeordnet. Jedem Tragarm 12 ist eine als Hydraulikzylinder 13 ausgeführte Aktorik zugeordnet, mit der der jeweilige Tragarm 12 in einem Betriebsmodus betreibbar ist, in welchem ein Kopieren eines kupierten Bodens durch den Messerbalken 6 ermöglicht wird. Hierzu werden die Hydraulikzylinder 13 derart mit einem hydraulischen Druck beaufschlagt, dass der Messerbalken 6 mit einer von der Druckbeaufschlagung abhängigen Gewichtskraft auf dem kupierten Boden aufliegt. Eine Sollbewegungshöhe des Grundrahmens 2 wird durch unterhalb des Einzugskanals 11 angeordnete Hydraulikzylinder eingestellt. Bei einer Änderung der Bodenkontur, welcher der Messerbalken 6 zumindest abschnittsweise folgt, erfahren die Tragarme 12 eine vertikale Auslenkung. Die Richtung und Größenordnung der vertikalen Auslenkung wird mittels der Sensoranordnung 15 bestimmt.

Die zumindest eine Sensoranordnung 15 ist zur Erfassung der Schwenkbewegung der Tragarme 12 eingerichtet, welche durch die vertikale Auslenkung des Messerbalkens 6 hervorgerufen wird, wenn das Schneidwerk 1 über den kupierten Boden geführt wird. Die Sensoranordnung 15 umfasst eine durchgehende Welle 16, welche sich im Wesentlichen über die gesamte Breite des jeweiligen Seitenabschnitts 4 erstreckt. Die Welle 16 ist in Konsolen 14, die jedem Tragarm 12 zugeordnet sind, drehbar gelagert. Weiterhin ist an jeder Konsole 14 jeweils eine Hebelanordnung 17 vorgesehen, durch welche die Welle 16 mit dem jeweiligen Tragarm 12 verbunden ist. Die Hebelanordnung 17 dient dazu, die Auslenkung des Tragarmes 12 in vertikaler Richtung auf die Welle 16 in Form einer sensorisch erfassbaren Drehbewegung zu übertragen. Durch die Hebelanordnung 17 wird bei einer Lageänderung des Tragarmes 12 die Auslenkung des Tragarmes 12 in vertikaler Richtung auf die Welle 16 als eine rotatorische Bewegung übertragen. Die größte vertikale Auslenkung eines Tragarmes 12 an einem Seitenabschnitt 4 resultiert in der stärksten Verdrehung der Welle 16. Die Welle 16 des Seitenabschnitts 4 ist mit zumindest einem - nicht dargestellten - Sensor der Sensoranordnung 15 verbunden, der zur Erfassung der von der Hebelanordnung 17 auf die Welle 16 übertragenen Drehbewegung eingerichtet ist. Bevorzugt ist der zumindest eine Sensor als potentiometrischer Sensor ausgeführt. Denkbar ist auch eine Ausführung des zumindest einen Sensors als ein berührungsloser Sensor, wie einem Hall-Effekt-Sensor.

Wie in Fig. 1 angedeutet, ist dem Schneidwerk 1 eine Steuerungsvorrichtung 30 zugeordnet, die unmittelbar an dem Schneidwerk 1 angeordnet sein kann oder an dem Mähdrescher. Die Steuerungsvorrichtung 30 umfasst eine Recheneinheit 31 sowie eine Speichereinheit 32. Die Steuerungsvorrichtung 31 ist durch eine Signalleitung 33 mit der Sensoranordnung 15 verbunden, um von dieser erfasste Signale zu empfangen und mittels Algorithmen, die in der Speichereinheit 32 hinterlegt sind, durch die Recheneinheit 31 auswerten zu können. Des Weiteren ist die Steuerungsvorrichtung 30 dazu eingerichtet, den hydraulischen Druck einzustellen, mit dem die Hydraulikzylinder 13 der Tragarme 12 beaufschlagt werden. Hierzu werden die Hydraulikzylinder 13 derart mit einem hydraulischen Druck beaufschlagt, dass der Messerbalken 6 mit einer von der Druckbeaufschlagung abhängigen Gewichtskraft auf dem kupierten Boden aufliegt. Bei einer Änderung der Bodenkontur, welcher der Messerbalken 6 zumindest abschnittsweise folgt, erfahren die Tragarme 12 eine vertikale Auslenkung. Die vertikale Auslenkung wird mittels der Sensoranordnung 15 bestimmt.

Die von der Sensoranordnung 15 erfasste größte vertikale Auslenkung eines Tragarmes 12 wird durch den zumindest einen Sensor der Steuerungsvorrichtung 30 zur Auswertung durch die Recheneinheit 31 zugeführt und kann auf einer mit der Steuerungsvorrichtung 30 verbundenen Anzeigeeinrichtung zur Anzeige gebracht werden.

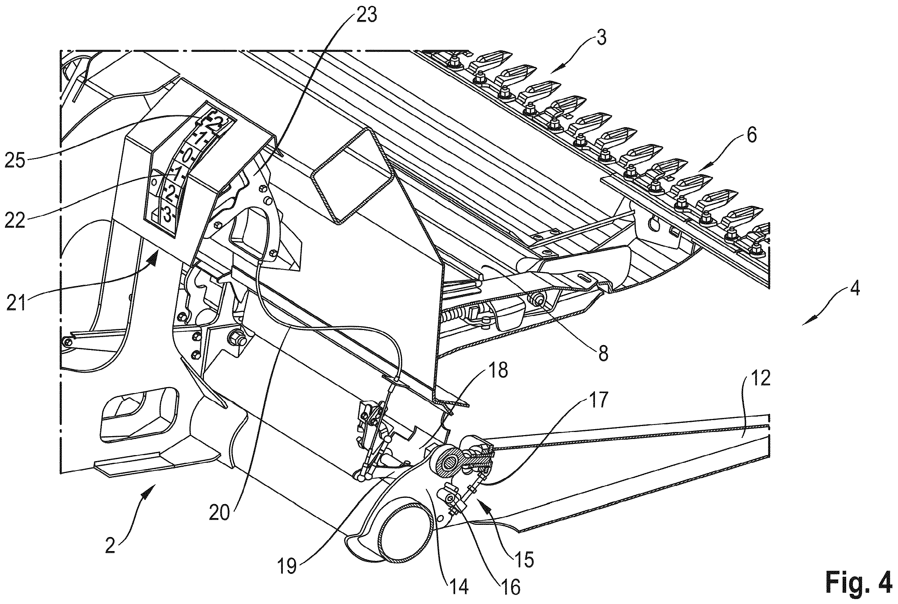

In Fig. 4 ist eine Teilansicht des Schneidwerks 1 von schräg hinten dargestellt. Der im Vordergrund dargestellte einzelne Tragarm 12 eines der Seitenabschnitte 4 ist im Längsschnitt gezeigt und ist unmittelbar benachbart zu dem Mittenabschnitt 3 angeordnet. Der Grundrahmen 2 weist eine Öffnung 18 auf, durch welche sich ein Hebel 19 abschnittsweise erstreckt. Ein Ende des Hebels 19 ist drehfest mit der Welle 16 verbunden. Am freien Ende des Hebels 19 ist ein Bowdenzug 20 angeschlossen. Auf der dem Messerbalken 6 abgewandten Seite des Grundrahmens 2 ist ein Positionsindikator 21 angeordnet.

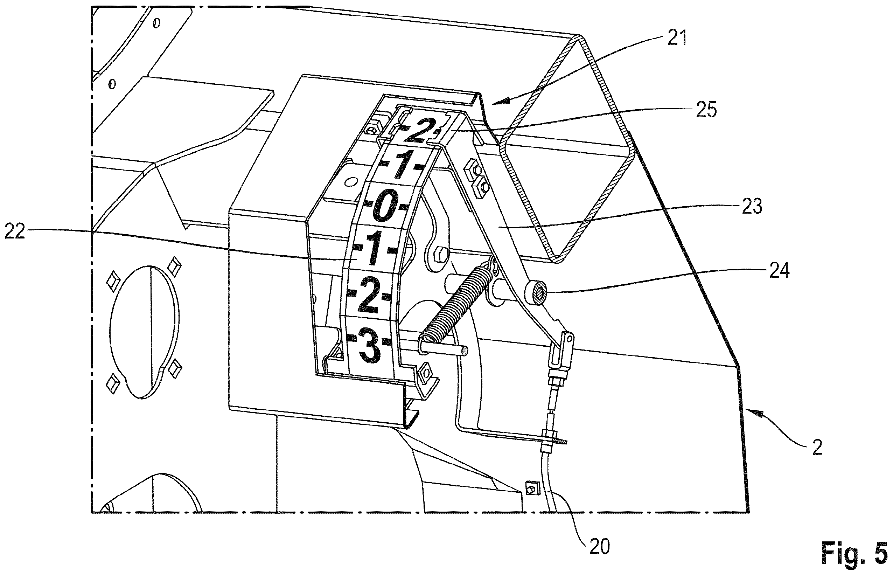

Fig. 5 zeigt eine Teilansicht des Schneidwerks 1 von hinten mit dem daran angeordneten Positionsindikator 21. Der Positionsindikator ist mit einer bogenförmigen Skale 22. Entlang der Skale 22 ist ein um eine Schwenkachse 24 schwenkbares Anzeigeelement 23 relativ verschiebbar positioniert, wie in Fig. 5 dargestellt ist. Das Anzeigeelement 23 ist als ein Hebelarm ausgebildet ist, wobei an einem Ende des Anzeigeelements 23 das den Bowdenzug 20 umfassende Übertragungsmittel angreift. Das andere Ende des Anzeigeelements 23 dient als Zeiger 25, der entlang der Skale 22 aufgrund der von dem Bowdenzug 20 übertragenen Drehbewegung der Welle 16 verschiebbar ist. Durch die mechanische Kopplung des Positionsindikators 21 mit der Welle 16 der Sensoranordnung 15 wird erreicht, dass der von dem Positionsindikator 21 signalisierte Wert mit dem an die Steuerungsvorrichtung 30 übertragenen Signal des Sensors der Sensoranordnung 15 korrespondiert. Auf diese Weise können Fehleinstellungen verhindert werden, die dazu führen, dass eine Auslenkung des Messerbalkens 6 nach oben größer als ein Sicherheitsabstand zwischen der Sollposition und einem oberen Endanschlag zur Vermeidung von Überlastungen von Messerbalken 6 und Tragarmen12 ist. Zudem wird das Einstellen des Schneidwerks 1 im Stand sogar bei unebenen Untergrund ermöglicht, da die Genauigkeit der Einstellung der Sollbewegungshöhe und der tatsächlichen Position des Schneidwerks 1 weitgehend unabhängig von der Beschaffenheit des Bodens ist.

Die Skale 22 ist mit Zahlen versehen, wobei im dargestellten Ausführungsbeispiel die Zahl Null eine Neutralstellung wiedergibt. Die weiteren Zahlenwerte auf der Skale 22 geben die richtungsabhängige Drehung der zumindest einen Welle 16 aufgrund der stärksten erfassten vertikalen Auslenkung eines der Tragarme 12 wieder. Mit zunehmender Größe der Zahlenwerte wird signalisiert, dass sich die jeweilige maximale Auslenkung im Bereich eines der Endanschläge bewegt. Zusätzlich kann ein Farbkodierung, beispielsweise in Form einer Ampel, vorgesehen sein, um auf einen Bereich ordnungsgemäßen Betriebs, einen Übergangsbereich und einen kritischen Betriebsbereich hinzuweisen. Hierzu kann die Skale 22 selbst farbig ausgeführt sein oder aber neben den Zahlenwerten sind zusätzlich farbige Markierungen vorgesehen. Die Neutralstellung stellt sich ein, wenn während der Einstellung von Sollbewegungshöhe und Sollposition, die an der Steuerungsvorrichtung 30 vorgegebene Sollposition erreicht wird. Während des laufenden Erntebetriebs ändert der Zeiger 25 seine Relativposition zur Skale 22 fortlaufend, was von der in einer Kabine des Mähdreschers oberhalb des Schneidwerks 1 befindlichen Bedienperson fortwährend beobachtet werden kann. Ermöglicht wird dies durch die dem Messerbalken 6 abgewandte Anordnung des Positionsindikators 21, der vorzugsweise an einem oberen Abschnitt des Grundrahmens 2 positioniert ist, insbesondere benachbart zum Einzugskanal 11 des Mähdreschers.

### Bezugszeichenliste

- 1: Schneidwerk
- 2: Grundrahmen
- 3: Mittenabschnitt
- 4: Seitenabschnitt
- 5: Fördervorrichtung
- 6: Messerbalken
- 7: Band
- 8: Förderband
- 9: Einzugsvorrichtung
- 10: Einzugswalze
- 11: Einzugskanal
- 12: Tragarm
- 13: Hydraulikzylinder
- 14: Konsole
- 15: Sensoranordnung
- 16: Welle
- 17: Hebelanordnung
- 18: Öffnung
- 19: Hebel
- 20: Bowdenzug
- 21: Positionsindikator
- 22: Skale
- 23: Anzeigeelement
- 24: Schwenkachse
- 25: Zeiger

- 30: Steuerungsvorrichtung
- 31: Recheneinheit
- 32: Speichereinheit
- 33: Signalleitung

## Patentansprüche

1. Erntevorsatzgerät (1), umfassend einen Rahmen (2) sowie einen bodenkopierenden Messerbalken (6), welcher an einer Vielzahl von um zumindest eine horizontale Achse schwenkbarer Tragarme (12) angeordnet ist, die an dem Rahmen (2) angelenkt sind, wobei zur Erfassung der Schwenkbewegung wenigstens eines der Tragarme (12) zumindest eine Sensoranordnung (15) an dem Erntevorsatzgerät (1) angeordnet ist, wobei die zumindest eine Sensoranordnung (15) wenigstens einen Messwertaufnehmer (16) umfasst, auf welchen die Schwenkbewegung der Tragarme (12) des Erntevorsatzgerätes (1) mechanisch übertragbar ist, **dadurch gekennzeichnet, dass** an dem Erntevorsatzgerät (1) ein Positionsindikator (21) angeordnet ist, der an die Bewegung des wenigstens einen Messwertaufnehmers (16) gekoppelt ist, wobei der Messwertaufnehmer (16) als zumindest eine sich parallel zum Rahmen (2) erstreckende, drehbar gelagerte Welle (16) ausgebildet ist, die mit den jeweiligen Tragarmen (12) durch jeweils eine Hebelanordnung (17) verbunden ist, der Positionsindikator (21) mit einer bogenförmigen Skale (22) ausgeführt ist, entlang der ein um eine Schwenkachse (24) schwenkbares Anzeigeelement (23) verschiebbar ist, wobei die Skale (22) einen Wert für eine Neutralstellung aufweist, sowie weitere Werte, die die richtungsabhängige Drehung der zumindest einen Welle (16) aufgrund der stärksten Auslenkung eines der Tragarme (12) wiedergeben.

2. Erntevorsatzgerät (1) nach Anspruch 1, **dadurch gekennzeichnet, dass** die zumindest eine Sensoranordnung (15) zumindest einen Sensor zur Erfassung der Drehbewegung der Welle (16) umfasst.

3. Erntevorsatzgerät (1) nach einem der Ansprüche 1 bis 2, **dadurch gekennzeichnet, dass** der Positionsindikator (21) an einer dem Messerbalken (6) abgewandten Seite des Rahmens (2) angeordnet ist.

4. Erntevorsatzgerät (1) nach einem der Ansprüche 1 bis 3, **dadurch gekennzeichnet, dass** der Positionsindikator (21) durch Übertragungsmittel (19, 20) mit der Welle (2) zur Übertragung ihrer Bewegung auf den Positionsindikator (21) verbunden ist.

5. Erntevorsatzgerät (1) nach Anspruch 4, **dadurch gekennzeichnet, dass** das Übertragungsmittel einen Bowdenzug (20) umfasst ist.

6. Erntevorsatzgerät (1) nach Anspruch 4, **dadurch gekennzeichnet, dass** das Übertragungsmittel eine Koppelstange oder eine Geber-Nehmer-Zylinderanordnung umfasst ist.

7. Erntevorsatzgerät (1) nach einem der Ansprüche 1-6, **dadurch gekennzeichnet, dass** das Anzeigeelement (23) als ein Hebelarm ausgebildet ist, wobei an einem Ende des Anzeigeelements (23) das Übertragungsmittel (18, 19) angreift und dessen anderes Ende als ein Zeiger (25) fungiert.

8. Mähdrescher mit einem Erntevorsatzgerät (1) sowie einer Steuerungsvorrichtung (30) zur Ansteuerung des Erntevorsatzgerätes (1), **dadurch gekennzeichnet, dass** das Erntevorsatzgerät (1) nach einem der Ansprüche 1 bis 7 ausgebildet ist.

## Claims

1. A harvester header (1) comprising a frame (2) as well as a ground-following cutter bar (6) which is disposed on a plurality of support arms (12) which are pivotable about at least a horizontal axis and which are articulated upon the frame (2), wherein at least one sensor assembly (15) is disposed on the harvester header (1) in order to detect the pivotal movement of at least one of the support arms (12), wherein the at least one sensor assembly (15) comprises at least one measurement pick-up (16) onto which the pivotal movement of the support arms (12) of the harvester header (1) can be mechanically transmitted, **characterized in that** a position indicator (21) is disposed on the harvester header (1) and is coupled to the movement of the at least one measurement pick-up (16), wherein the measurement pick-up (16) is constructed as at least one pivotally mounted shaft (16) which extends parallel to the frame (2) and which is connected to the respective support arms (12) through a respective lever assembly (17), the position indicator (21) is configured with an arcuate scale (22) along which an indicator element (23) which is pivotable about a pivot axis (24) can be displaced, wherein the scale (22) has a value for a neutral position as well as other values which represent the direction-dependent rotation of the at least one shaft (16) on the basis of the strongest deflection of one of the support arms (12).

2. The harvester header (1) according to claim 1, **characterized in that** the at least one sensor assembly (15) comprises at least one sensor for detecting the rotational movement of the shaft (16).

3. The harvester header (1) according to one of claims 1 to 2, **characterized in that** the position indicator (21) is disposed on a side of the frame (2) which faces away from the cutter bar (6).

4. The harvester header (1) according to one of claims 1 to 3, **characterized in that** the position indicator (21) is connected to the shaft (2) via transmission means (19, 20) in order to transmit the movement of the shaft to the position indicator (21).

5. The harvester header (1) according to claim 4, **characterized in that** the transmission means comprises a Bowden cable (20).

6. The harvester header (1) according to claim 4, **characterized in that** the transmission means comprises a coupling rod or a master/slave cylinder assembly.

7. The harvester header (1) according to one of claims 1 to 6, **characterized in that** the indicator element (23) is configured as a lever arm, wherein the transmission means (18, 19) engages on one end of the indicator element (23) and the other end functions as a pointer (25).

8. A combine harvester having a harvester header (1) as well as a control device (30) for controlling the harvester header (1), **characterized in that** the harvester header (1) is configured in accordance with one of claims 1 to 7.

## Revendications

1. Outil frontal de récolte (1) comprenant un bâti (2) ainsi qu'une barre porte-lames à suivi de sol (6), laquelle est disposée sur une pluralité de bras porteurs (12) qui peuvent pivoter autour d'au moins un axe horizontal et qui sont articulés sur le bâti (2), au moins un agencement de capteur (15) étant disposé sur l'outil frontal de récolte (1) pour détecter le mouvement pivotant d'au moins un des bras porteurs (12), l'agencement de capteur, au nombre d'au moins un, (15) comprenant au moins un transducteur de valeurs de mesure (16) auquel le mouvement pivotant des bras porteurs (12) de l'outil frontal de récolte (1) peut être transmis mécaniquement, **caractérisé en ce que** sur l'outil frontal de récolte (1) est disposé un indicateur de position (21) qui est couplé au mouvement du transducteur de valeurs de mesure (16), au nombre d'au moins un, le transducteur de valeurs de mesure (16) étant réalisé sous la forme d'au moins un arbre (16) qui est monté à rotation, s'étend parallèlement au bâti (2) et est relié aux bras porteurs (12) respectifs, respectivement par l'intermédiaire d'un agencement de levier (17), l'indicateur de position (21) étant réalisé avec une échelle graduée (22) en forme d'arc, le long de laquelle peut être coulissé un élément indicateur (23) pouvant pivoter autour d'un axe de pivotement (24), l'échelle graduée (22) présentant une valeur pour une position neutre, ainsi que d'autres valeurs qui reproduisent la rotation, en fonction du sens, de l'arbre (16), au nombre d'au moins un, sur la base de la plus forte déviation de l'un des bras porteurs (12).

2. Outil frontal de récolte (1) selon la revendication 1, **caractérisé en ce que** l'agencement de capteur (15), au nombre d'au moins un, comprend au moins un capteur pour la détection du mouvement de rotation de l'arbre (16) .

3. Outil frontal de récolte (1) selon l'une des revendications 1 à 2, **caractérisé en ce que** l'indicateur de position (21) est disposé sur un côté du bâti (2) situé à l'opposé de la barre porte-lames (6).

4. Outil frontal de récolte (1) selon l'une des revendications 1 à 3, **caractérisé en ce que** l'indicateur de position (21) est relié à l'arbre (2) par des moyens de transmission (19, 20), en vue de la transmission du mouvement de celui-ci à l'indicateur de position (21).

5. Outil frontal de récolte (1) selon la revendication 4, **caractérisé en ce que** le moyen de transmission comprend un câble Bowden (20).

6. Outil frontal de récolte (1) selon la revendication 4, **caractérisé en ce que** le moyen de transmission comprend une tige d'accouplement ou un agencement de vérins maître-esclave.

7. Outil frontal de récolte (1) selon l'une des revendications 1 à 6, **caractérisé en ce que** l'élément indicateur (23) est réalisé sous la forme d'un bras de levier, le moyen de transmission (18, 19) agissant à une extrémité de l'élément indicateur (23) et l'autre extrémité de ce dernier faisant fonction d'aiguille (25).

8. Moissonneuse-batteuse comprenant un outil frontal de récolte (1) ainsi qu'un dispositif de commande (30) pour agir sur l'outil frontal de récolte (1), **caractérisée en ce que** l'outil frontal de récolte (1) est réalisé selon l'une des revendications 1 à 7.
